# FASCICULE DE BREVET EUROPEEN

(11) **EP 2 995 851 B1**
(45) Date de publication et mention de la délivrance du brevet: **24.07.2024**
(21) Numéro de dépôt: 15184350.5
(22) Date de dépôt: 08.09.2015
(51) Int. Cl.: B60Q 1/00, B60Q 1/26, H05B 33/24, B60Q 1/30, B60Q 1/44, B60Q 1/38, F21S 43/14, F21S 43/30, F21S 43/33, F21S 43/40, F21V 5/00, F21W 103/15, F21W 103/20, F21W 103/35, F21Y 113/20, F21S 43/145

(54) **MODULE LUMINEUX AVEC DIODES LED ET OLED**
LEUCHTMODUL MIT LED- UND OLED-DIODEN
LIGHT MODULE WITH LED AND OLED DIODES

(30) Priorité: 15.09.2014 FR 1458668
(43) Date de publication de la demande: 16.03.2016
(73) Titulaire: VALEO VISION, 93012 Bobigny Cedex (FR)
(72) Inventeur: DUBOSC, Christophe, 93250 VILLEMOMBLE (FR); JIN, Hui, 75014 PARIS (FR); SAGNA, Boubacar, 78500 SARTROUVILLE (FR); HUE, David, 95430 BUTRY SUR OISE (FR)
(74) Mandataire: Valeo Visibility

(56) Documents cités:
- EP-A1- 2 453 167
- EP-A2- 2 505 911
- WO-A1-2011/107904
- DE-A1- 102007 041 817
- DE-A1- 102008 013 604
- US-A1- 2003 053 318
- US-B1- 6 280 480

## Description

L'invention a trait au domaine de l'éclairage et/ou de la signalisation lumineuse, notamment pour véhicule automobile. Plus précisément, l'invention a trait au domaine de l'éclairage et de la signalisation lumineuse au moyen de diodes à électroluminescence (LED) et de diodes à électroluminescence organiques (OLED).

Le document de brevet publié FR 2 956 468 A1 divulgue (figure 4) un module lumineux pour véhicule automobile, comprenant une première source lumineuse surfacique du type OLED et une deuxième source lumineuse également surfacique et du type OLED. Les deux diodes OLED sont disposées parallèlement l'une à l'autre, les rayons émis par la première en direction de la deuxième étant réfléchis par cette dernière en vue de former un faisceau lumineux. A cet effet, les rayons réfléchis par la deuxième diode traversent la première diode pour former le faisceau lumineux. La deuxième source lumineuse assure ainsi une double fonction, à savoir une première fonction de surface réfléchissante et une deuxième fonction d'éclairage. En effet, la deuxième diode peut être alimentée indépendamment de la première tout en assurant sa fonction de réflexion des rayons émis par la première. Les rayons lumineux émis pas les deux diodes peuvent ainsi être émis indépendamment et se compléter. Le module lumineux de cet enseignement est par conséquent intéressant en ce qu'il permet de compléter un faisceau lumineux produit par une des sources par le faisceau lumineux de l'autre source. Il présente toutefois l'inconvénient qu'une partie importante des rayons émis et/ou réfléchis par la deuxième diode doit traverser la première diode. Le fait de devoir traverser la première diode provoque en effet des pertes lumineuses non négligeables.

Le document de brevet publié US 6 280 480 B1 décrit un module lumineux pour véhicule automobile comportant deux sources de lumières. Le document de brevet publié EP 2 453 167 A1 décrit un module lumineux pour véhicule automobile comportant une source lumineuse surfacique du type OLED.

L'invention a pour objectif de proposer un module lumineux palliant au moins un des inconvénients de l'art antérieur, plus particulièrement de l'art antérieur susmentionné. Plus particulièrement, l'invention a pour objectif de proposer un module lumineux pourvu d'une source lumineuse surfacique, telle qu'une diode OLED, et permettant d'assurer plusieurs fonctions d'éclairage et/ou de signalisation de manière efficace.

L'invention a pour objet un module lumineux tel que défini dans la revendication 1.

Avantageusement, le collimateur est agencé de sorte à dévier les rayons lumineux émis par la première source lumineuse de sorte à ce que ses rayons atteignent une partie, par exemple une partie inférieure, seulement de la deuxième source surfacique.

La deuxième source surfacique lumineuse du type diode à électroluminescence organique est réfléchissante. Avantageusement, elle est constituée d'une superposition de plusieurs couches semi-conductrices organiques entre deux électrodes dont l'une est transparente et l'autre est réfléchissante. L'électrode réfléchissante est disposée à l'arrière par rapport au sens de propagation du faisceau lumineux selon l'axe optique.

Selon un mode avantageux de l'invention, le collimateur comprend un élément translucide ou transparent formant deux dioptres.

Selon un mode avantageux de l'invention, la première source lumineuse est constituée d'une ou plusieurs diodes à électroluminescence. La ou chacune de ces sources présente une surface principale inférieure à 30 mm₂, voire inférieure à 5 mm².

La deuxième source surfacique lumineuse présente une surface principale supérieure à 100 mm₂.

Selon un mode avantageux de l'invention, la ou les diodes à électroluminescence de la première source lumineuse éclairent dans une demi-espace délimité par un plan moyen formant un angle α de moins de 70°, préférentiellement moins de 60°, plus préférentiellement moins de 50°, avec la perpendiculaire au plan moyen de la deuxième source lumineuse correspondante.

Selon un mode avantageux de l'invention, l'angle d'incidence β des rayons sortant du collecteur avec la deuxième source lumineuse est supérieur à 10°, préférentiellement 15°, plus préférentiellement 20°.

Selon un mode avantageux de l'invention, le collimateur est disposé optiquement entre les première et deuxième sources lumineuses.

Selon un mode avantageux de l'invention, la deuxième source lumineuse forme un angle γ avec une direction perpendiculaire à l'axe optique du module, qui est compris entre 3° et 30°, préférentiellement entre 5° et 25°, plus préférentiellement entre 8° et 20°.

Selon un mode avantageux de l'invention, la deuxième source lumineuse est inclinée dans la direction du faisceau lumineux par rapport à une direction perpendiculaire à l'axe optique du module.

Selon un mode avantageux de l'invention, le faisceau lumineux formé par réflexion sur la deuxième source lumineuse est un premier faisceau, la deuxième source lumineuse étant apte à produire un deuxième faisceau lumineux. Avantageusement, les premier et deuxième faisceaux réalisent chacun une partie, voire la totalité d'une fonction réglementaire photométrique distincte. En variante, les premier et deuxième faisceaux peuvent réaliser ensemble une fonction photométrique réglementaire.

Selon un mode avantageux de l'invention, le premier faisceau correspond à une fonction de signalisation de freinage pour véhicule automobile et/ou le deuxième faisceau correspond à une fonction de signalisation de position pour véhicule automobile.

Selon un mode avantageux de l'invention, la deuxième source lumineuse s'étend transversalement à l'axe optique du module au-delà de la première source lumineuse.

Selon un mode avantageux de l'invention, la deuxième source lumineuse comprend deux diodes à électroluminescence organique s'étendant transversalement à l'axe optique dans des directions généralement opposées et inclinées dans la direction du faisceau lumineux par rapport à une direction perpendiculaire à l'axe optique du module.

Selon un mode avantageux de l'invention, la première source lumineuse comprend deux jeux de diodes à électroluminescence ponctuelles, chaque jeu étant disposé de manière à éclairer une des deux diodes à électroluminescence organique surfacique, respectivement.

Selon un mode avantageux de l'invention, les deux jeux de diodes de la première source lumineuse sont disposés, respectivement sur deux parois inclinées par rapport à l'axe optique de manière à former une cavité avec une ouverture dirigée vers l'avant du module, le module comprenant une troisième source lumineuse disposée dans ladite cavité et apte à former un faisceau lumineux supplémentaire.

Selon un mode avantageux de l'invention, le collimateur est un premier collimateur, le module comprenant un deuxième collimateur dans la cavité, apte à dévier les rayons lumineux émis par la troisième source lumineuse selon l'axe optique en vue de former le faisceau lumineux supplémentaire.

Selon un mode avantageux de l'invention, le faisceau lumineux supplémentaire correspond à une fonction d'indication de direction pour véhicule automobile.

Selon un mode avantageux de l'invention, la deuxième source lumineuse comprend plusieurs zones lumineuses qui peuvent être alimentées de manière indépendante.

L'invention a également pour objet un dispositif lumineux, notamment d'éclairage et/ou de signalisation, pour véhicule automobile, comprenant : un boîtier ; un module lumineux logé dans le boîtier ; remarquable en ce que le module lumineux est conforme à l'invention.

Avantageusement, le dispositif lumineux comprend plusieurs modules lumineux selon l'invention.

Les mesures de l'invention sont intéressantes en ce qu'elles permettent d'exploiter de manière efficace la propriété de réflexion d'une diode surfacique du type OLED. Elles permettent ainsi de compléter, via cet effet de réflexion, un faisceau lumineux émanant d'une diode OLED par un faisceau complémentaire émis par des diodes ponctuelles du type LED. Le faisceau lumineux produit par réflexion sur la deuxième source lumineuse ne doit pas traverser une surface semi-réfléchissante, comme dans l'état de la technique susmentionné.

D'autres caractéristiques et avantages de la présente invention seront mieux compris à l'aide de la description et des dessins parmi lesquels :
- La figure 1 est une vue en perspective d'un module lumineux conforme à l'invention ;
- La figure 2 est une vue de face du module de la figure 1 ;
- La figure 3 est une vue en perspective du module des figures 1 et 2, le module étant dépourvu de ses collimateurs ;
- La figure 4 est une vue du module de la figure 3 selon un autre angle de perspective ;
- La figure 5 est une représentation d'un des collimateurs du module des figures 1 à 4 ;
- La figure 6 est une vue de profil du module des figures 1 à 4, illustrant le parcours d'un rayon lumineux ;
- La figure 7 est une vue de face d'une des sources lumineuses du type OLED du module des figures 1 à 4.

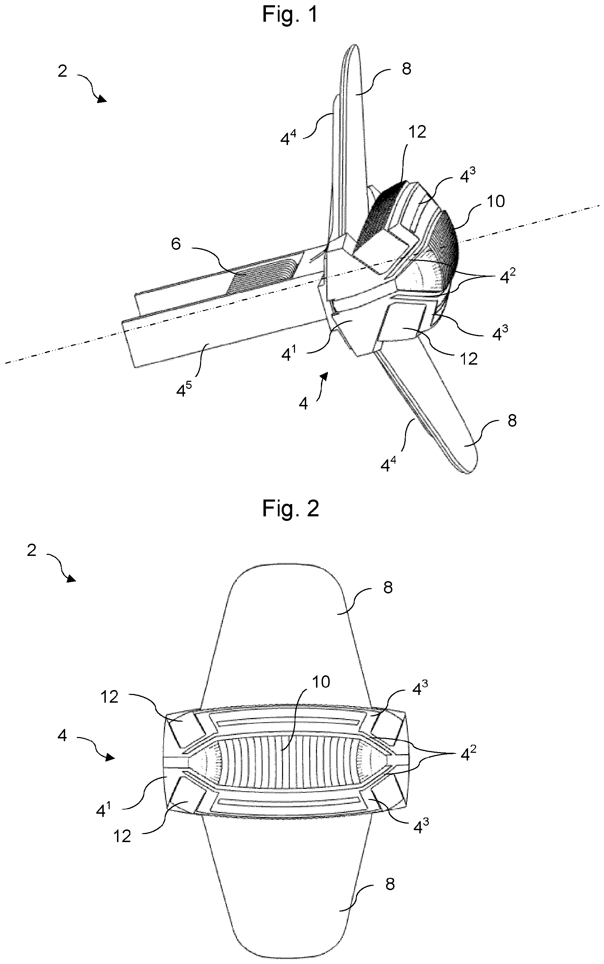

Les figures 1 et 2 illustrent un module de signalisation lumineuse pour véhicule automobile. Le module 2 est configuré pour être logé dans un boîtier disposé à l'arrière du véhicule. Il est configuré pour assurer une fonction de lanterne (ou feux arrière), une fonction de feux stop et une fonction d'indicateur de direction (ou clignotant).

Le module 2 comprend un substrat 4 pourvu d'une partie centrale 4¹, de deux parois 4² latérales, de deux parois frontales 4³ faisant saillie des parois latérales 4², de deux supports 4⁴ et d'une partie arrière 4⁵. La partie arrière 4⁵ est configurée pour coopérer avec un connecteur 6 d'alimentation électrique. Les deux parois latérales 4² forment une cavité logeant des sources lumineuses (non visibles aux figures 1 et 2) ainsi qu'un collimateur 10 en vue de former un faisceau lumineux pour une fonction d'indicateur de direction. Les supports 4⁴ sont disposés de manière à faire saillie de la partie centrale 4¹ du substrat 4 de manière essentiellement opposé l'un à l'autre. Chacun de ces supports 4⁴ soutient une diode surfacique du type OLED 8.

Une OLED est une diode à électroluminescence comprenant une superposition de plusieurs couches semi-conductrices organiques entre deux électrodes dont l'une est transparente. Le substrat 4 du module supporte également une ou plusieurs sources lumineuses (non visibles aux figures 1 et 2) entre les parois latérales 4² et les diodes OLED 8, cette ou ces sources lumineuses étant recouvertes d'un collimateur 12 en vue d'assurer une fonction de feux stop. Plus précisément, les rayons émis par ces sources lumineuses sont déviés par le collimateur 12 pour rencontrer la face avant de la diode OLED 8 correspondante et y être réfléchis vers l'avant du module.

L'axe longitudinal du module représenté à la figure 1 correspond à son axe optique. Cela signifie que les différents faisceaux lumineux produits par le module 2 sont orientés essentiellement selon cet axe. Tous ces faisceaux sont préférentiellement dirigés vers l'avant du module (correspondant à la droite à la figure 1 et à l'arrière du véhicule).

Les collimateurs 10 et 12 sont des pièces en matière transparente ou translucide, telle que du verre ou du polycarbonate (PC) ou en polyméthacrylate de méthyle (PMMA). Ils comprennent des surfaces d'entrée et ou de sorties orientées de manière à dévier les rayons selon une direction principale, en application du principe de réfraction de Snell-Descartes. Les faces d'entrée et de sortie forment en effet chacune un dioptre, à savoir une surface séparant deux milieux transparents homogènes et isotropes, d'indices de réfraction différents. L'indice de réfraction de l'air est en effet de l'ordre de 1 alors que celui du verre et du polycarbonate est situé entre 1.4 et 1.6 environ. Le principe de fonctionnement d'un collimateur est bien connu en soi de l'homme de métier ; il n'est par conséquent pas nécessaire de le détailler davantage.

Le substrat 4 est en matière plastique réalisée par moulage et supporte les sources lumineuses et les pistes électriques, conformément à la technologie MID (acronyme de « Molded Interconnect Device »).

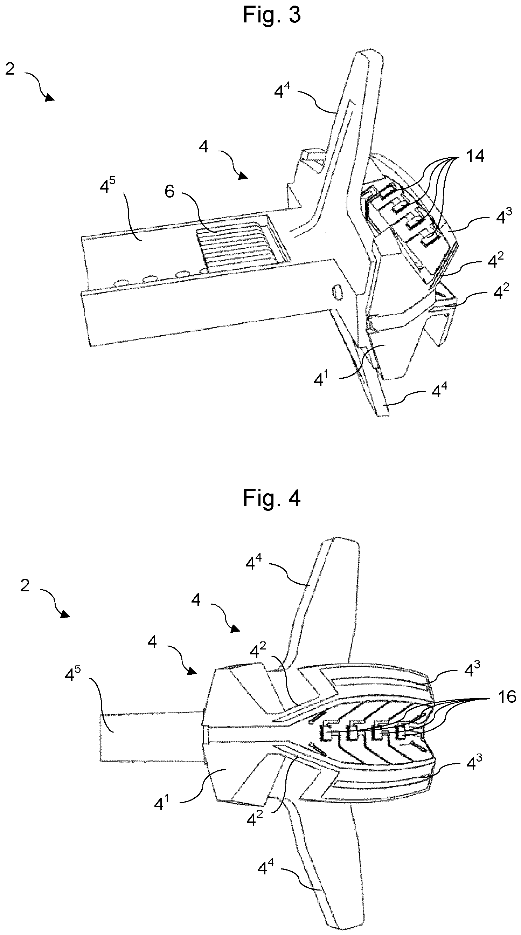

Les figures 3 et 4 illustrent le module lumineux des figures 1 et 2, le module étant toutefois dépourvu des collimateurs 10 et 12, et des diodes OLED 8.

La figure 3 met en évidence les diodes LED 14 (mentionnées précédemment en relation avec les figures 1 et 2) disposées entre les parois latérales 4² et les supports 4⁴ du substrat 4. Plus précisément, ces diodes LED 14 sont disposées directement sur la face arrière de la paroi latérale supérieure 4² de manière à éclairer en direction de la diode OLED correspondante. Les diodes LED 14 sont réparties transversalement à l'axe optique de manière à éclairer essentiellement toute la largeur de la diode OLED correspondante. Similairement et de manière symétrique, des diodes LED du même type sont disposées sur la face arrière de la paroi latérale inférieure 4².

La figure 4 met en évidence les diodes LED 16 (également mentionnées précédemment en relation avec les figures 1 et 2) disposées dans le fond de la cavité formée par les parois latérales 4². Ces diodes 16 sont orientées de manière à éclairer dans la direction de l'axe optique. Elles sont réparties transversalement à l'axe optique de manière à occuper l'espace de la cavité.

Les diodes 14 et 16 sont préférentiellement collées sur le substrat 4. En effet, en raison de la nature thermoplastique du substrat, l'utilisation de procédés de soudure classique pour les contacts électriques n'est pas adaptée. Les diodes sont ainsi fixées mécaniquement et électriquement par application d'une colle à base de polymère et chargée en éléments métalliques. Il s'agit ainsi d'un procédé d'application dite « à froid » ne mettant pas à mal le substrat. Après polymérisation de la colle, celle-ci assure la fixation mécanique et électrique de la diode.

Des pistes électriques sont déposées directement sur le substrat en vue de l'alimentation électrique des diodes 14 et 16. Les pistes électriques peuvent être réalisées par la technologie désignée par l'acronyme LDS signifiant en langue anglaise « Laser Direct Structuring ». Il s'agit de faire parcourir un rayon laser sur la surface correspondante du substrat, suivant la configuration des pistes à réaliser. Le rayon laser a pour effet de former une rugosité apte à favoriser l'accrochage. Cette étape est suivie d'une métallisation par trempage du substrat dans un ou plusieurs bains métalliques successifs.

Alternativement ou de manière complémentaire, les pistes électriques peuvent être réalisées par impression du type jet d'encre dont l'encre comprend des particules métalliques.

Les pistes peuvent également être réalisées par un moulage en deux étapes du substrat, ou encore désigné « Two shot molding » en langue anglaise. Il s'agit d'un processus de moulage par injection en utilisant deux résines différentes où une seule des deux résines est métallisable. Typiquement, la résine métallisable est de l'ABS et la résine non-métallisable est du polycarbonate. Le substrat est ensuite soumis à un processus de dépôt auto-catalytique où du butadiène est utilisé pour chimiquement rendre la surface rugueuse et permettre l'adhérence d'une couche primaire de cuivre.

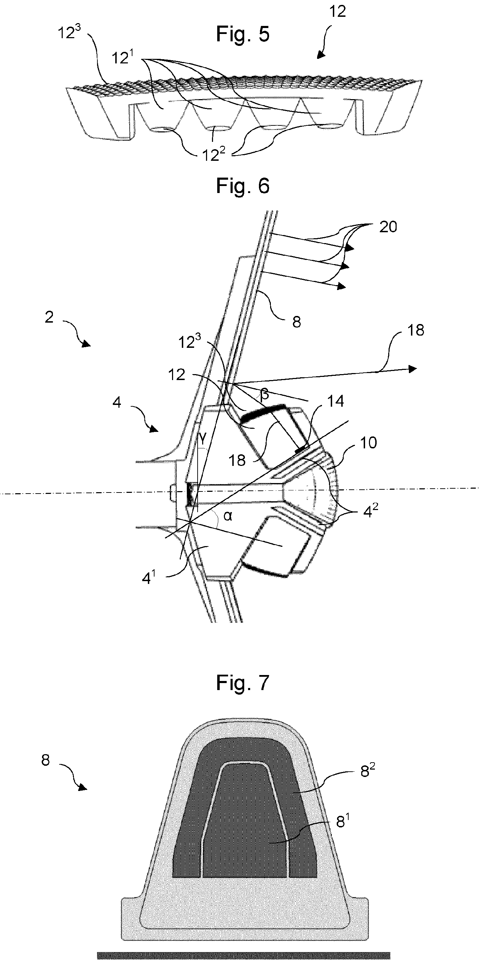

La figure 5 illustre le collimateur 12 destiné à être disposé optiquement entre les diodes LED 14 (figure 3) et les diodes OLED 8 (figures 1 et 2). Comme mentionné précédemment, le collimateur 12 est constitué d'un élément en matériau transparent ou translucide, comme par exemple du polycarbonate. Un tel élément peut ainsi être réalisé par moulage. En l'occurrence, le collimateur comprend une série de portions généralement coniques 12¹ destinées à être alignées avec les diodes. Chacune de ces portions 12¹ comprend à son extrémité libre et de section réduite une cavité formant une face d'entrée 12² pour la lumière émise par les diodes. Ces faces d'entrée 12² forment ainsi des premiers dioptres déviant les rayons émis par les diodes de manière à les rendre moins divergents. Ces rayons se propagent alors suivant un faisceau correspondant essentiellement à la forme des portions coniques 12¹. Le collimateur 12 comprend également des facettes 12³ formant des faces de sortie. Ces faces de sortie forment ainsi des deuxièmes dioptres pouvant dévier une deuxième fois les rayons. Ces facettes 12³ peuvent être orientées de manière à localement contrôler la direction des rayons sortant du collimateur. L'orientation des facettes 12³ peut varier le long de la longueur et de la largeur du collimateur 12 de manière à former un faisceau lumineux le plus homogène possible.

La figure 6 est une vue de côté de la partie centrale et supérieure du module lumineux des figures 1 à 4. Le parcours d'un rayon émis par une des diodes LED éclairant une des diodes OLED y est représenté. Le rayon 18 est dévié une première fois lorsqu'il pénètre la matière transparente ou translucide du collimateur 12. Cette déviation n'est pas visible compte tenu de la proximité entre la diode 14 et la face d'entrée correspondante du collimateur 12. Le rayon se propage essentiellement en ligne droite dans la matière du collimateur jusqu'à ce qu'il atteigne la face de sortie, en l'occurrence unefacette de sortie 12³. Le rayon 18 est alors dévié une deuxième fois de manière à être dirigé vers une portion de la diode OLED 8 correspondante qui est proche de la portion centrale 4¹ du substrat 4. En d'autres termes, les rayons émis par les diodes 14 sont déviés par les collimateurs 12 de manière à rencontrer les diodes OLED 8 correspondantes en des zones desdites diodes qui sont proches de l'axe optique.

Comme mentionné précédemment, les diodes OLED 8 sont constituées d'une superposition de plusieurs couches semi-conductrices organiques entre deux électrodes dont l'une est transparente. En l'occurrence, l'électrode située à l'arrière est réfléchissante de manière à ce que, d'une part, la lumière émise par les couches semi-conductrices soit efficacement dirigée vers l'avant, et d'autre part, les rayons émis par les diodes LED 14 en direction des diodes OLED 8 soient réfléchis. L'électrode située à l'avant peut par conséquent être totalement ou du moins majoritairement transparente.

Toujours en référence avec la figure 6, les diodes LED 14 éclairent dans un demi-espace délimité par la face arrière de la paroi latérale 4² sur laquelle ces diodes sont montées. Cette face de montage des diodes forme un plan moyen qui forme un angle α avec la perpendiculaire au plan moyen de la diode OLED correspondante, cet angle α étant inférieur à 70°, préférentiellement 60°, plus préférentiellement 50°. Cette limite supérieure de l'angle α permet, grâce au collimateur, d'éclairer une portion utile de la diode OLED. Cet angle α est par ailleurs préférentiellement supérieur à 20°, préférentiellement 30°, plus préférentiellement 40°. Cette limite inférieure de l'angle α permet, par ailleurs, d'assurer une réflexion des rayons par la diode OLED dans une direction qui correspond à l'axe optique du module.

Les diodes LED 14, le collimateur 12 et la diode OLED 8 peuvent ainsi être configurés de manière à ce que l'angle d'incidence β des rayons sortant du collimateur 12 soit compris entre 10° et 40°, préférentiellement entre 15° et 35°, plus préférentiellement entre 15° et 30°.

Les diodes OLED 8 forment avantageusement un angle γ avec une direction perpendiculaire à l'axe optique du module, cet angle γ pouvant être compris entre 3° et 30°, préférentiellement entre 5° et 25°, plus préférentiellement entre 8° et 20°. Les diodes OLED 8 sont par ailleurs inclinées vers l'avant. L'angle γ est supérieur à 0, préférentiellement à 3°, de manière à permettre la formation du faisceau lumineux correspondant au rayon 18. Cet angle est également limité de manière à ce que le faisceau lumineux produit par les rayons lumineux 20 émis par les diodes OLED 8 ne soit pas trop divergent par rapport à l'axe optique.

Le faisceau lumineux produit par réflexion des rayons 18 des diodes LED 14 peut ainsi être produit indépendamment de l'activation des diodes OLED 8. En d'autres termes, le faisceau lumineux des diodes LED 14 peut s'additionner au faisceau lumineux produit

La figure 7 illustre un exemple de diode surfacique OLED pour le module des figures 1 à 6. On peut observer que la diode 8 comprend deux zones éclairantes, à savoir une première zone 8¹ et une deuxième zone 8². Chacune de ces zones peut être activée de manière indépendante.

Le module qui vient d'être décrit peut ainsi assurer plusieurs fonctions de signalisation lumineuses. En l'occurrence, la partie centrale comprenant les diodes LED 16 et le collimateur 10 logés dans la cavité du substrat 4 peut assurer une fonction d'indicateur de direction (clignotant). Les diodes surfaciques OLED 8 peuvent assurer une fonction de signalisation de position (lanterne). Les diodes LED 14 avec les collimateurs 12 et la propriété de réflexion des diodes OLED 8 peuvent assurer une fonction d'indication de freinage (fonction stop). En effet, les exigences réglementaires en termes de photométrie sont plus élevées pour la fonction stop que pour la fonction de lanterne. La présence de plusieurs diodes 14, plus particulièrement de part et d'autre de l'axe optique, et la qualité de réflexion des diodes surfaciques 8 permet d'atteindre ces exigences.

## Revendications

1. Module lumineux (2), notamment pour véhicule automobile, comprenant :
- une première source lumineuse (14) du type à semi-conducteur;
- une deuxième source surfacique lumineuse (8) du type diode à électroluminescence organique apte à réfléchir les rayons lumineux émis par la première source lumineuse (14) en vue former un faisceau lumineux suivant un axe optique du module ;
**caractérisé en ce qu'**il comprend, en outre, un collimateur (12), possédant une face d'entrée (12²) déviant une première fois les rayons émis par la première source (14) pour les rendre moins divergents et des facettes (12³) formant une face de sortie déviant les rayons une deuxième fois, les rayons lumineux émis par la première source lumineuse (14) étant déviés par le collimateur (12) selon une direction principale de manière à ce que
- les rayons lumineux déviés rencontrent la deuxième source lumineuse (8) avec un angle d'incidence β non nul
- les rayons sont déviés la deuxième fois de manière à être dirigés vers une zone de la deuxième source (8) proche de l'axe optique du module lumineux.

2. Module lumineux (2) selon la revendication 1, **caractérisé en ce que** le collimateur(12) comprend un élément translucide ou transparent formant deux dioptres (12², 12³).

3. Module lumineux (2) selon l'une des revendications 1 à 2, **caractérisé en ce que** la première source lumineuse est constituée d'une ou plusieurs diodes à électroluminescence (14).

4. Module lumineux (2) selon la revendication 3, **caractérisé en ce que** la ou les diodes à électroluminescence (14) de la première source lumineuse éclairent dans une demi-espace délimité par un plan formant un angle α de moins de 70°, préférentiellement moins de 60°, plus préférentiellement moins de 50°, avec la perpendiculaire au plan moyen de la deuxième source lumineuse (8).

5. Module lumineux (2) selon l'une des revendications 1 à 4, **caractérisé en ce que** l'angle d'incidence β des rayons sortant du collimateur (12) avec la deuxième source lumineuse (8) est supérieur à 10°, préférentiellement 15°, plus préférentiellement 20°.

6. Module lumineux (2) selon l'une des revendications 1 à 5, **caractérisé en ce que** le collimateur (12) est disposé optiquement entre les première et deuxième sources lumineuses (14, 8).

7. Module lumineux (2) selon l'une des revendications 1 à 6, **caractérisé en ce que** la deuxième source lumineuse (8) forme un angle γ avec une direction perpendiculaire à l'axe optique du module, qui est compris entre 3° et 30°, préférentiellement entre 5° et 25°, plus préférentiellement entre 8° et 20°.

8. Module lumineux (2) selon l'une des revendications 1 à 7, **caractérisé en ce que** le faisceau lumineux formé par réflexion sur la deuxième source (8) lumineuse est un premier faisceau, la deuxième source lumineuse (8) étant apte à produire un deuxième faisceau lumineux.

9. Module lumineux (2) selon la revendication 8, **caractérisé en ce que** le premier faisceau correspond à une fonction de signalisation de freinage pour véhicule automobile et/ou le deuxième faisceau correspond à une fonction de signalisation de position pour véhicule automobile.

10. Module lumineux (2) selon l'une des revendications 1 à 9, **caractérisé en ce que** la deuxième source lumineuse (8) s'étend transversalement à l'axe optique du module au-delà de la première source lumineuse (14).

11. Module lumineux (2) selon l'une des revendications 1 à 10, **caractérisé en ce que** la deuxième source lumineuse (8) comprend deux diodes à électroluminescence organique s'étendant transversalement à l'axe optique dans des directions généralement opposées et inclinées dans la direction du faisceau lumineux par rapport à une direction perpendiculaire à l'axe optique du module.

12. Module lumineux (2) selon la revendication 11, **caractérisé en ce que** la première source lumineuse comprend deux jeux de diodes à électroluminescence ponctuelles (14), chaque jeu étant disposé de manière éclairer une des deux diodes à électroluminescence organique surfacique (8), respectivement.

13. Module lumineux (2) selon la revendication 12, **caractérisé en ce que** les deux jeux de diodes (14) de la première source lumineuse sont disposés, respectivement sur deux parois (4²) inclinées par rapport à l'axe optique de manière à former une cavité avec une ouverture dirigée vers l'avant du module, le module (2) comprenant une troisième source lumineuse (16) disposée dans ladite cavité et apte à former un faisceau lumineux supplémentaire.

14. Module lumineux (2) selon la revendication 13, **caractérisé en ce que** le collimateur (12) est un premier collimateur, le module (2) comprenant un deuxième collimateur (10) dans la cavité, apte à dévier les rayons lumineux émis par la troisième source lumineuse (16) selon l'axe optique en vue de former le faisceau lumineux supplémentaire.

15. Module lumineux (2) selon l'une des revendications 13 et 14, **caractérisé en ce que** le faisceau lumineux supplémentaire correspond à une fonction d'indication de direction pour véhicule automobile.

16. Dispositif lumineux, notamment d'éclairage et/ou de signalisation, pour véhicule automobile, comprenant :
- un boîtier ;
- un module lumineux logé dans le boîtier ;
**caractérisé en ce que**
le module lumineux est conforme à l'une des revendications 1 à 15.

## Patentansprüche

1. Leuchtmodul (2), insbesondere für ein Kraftfahrzeug, umfassend:
- eine erste Lichtquelle (14) vom Halbleitertyp;
- eine zweite flächige Lichtquelle (8) vom Typ organische Leuchtdiode, die geeignet ist, die von der ersten Lichtquelle (14) emittierten Lichtstrahlen zu reflektieren, um ein Lichtbündel entlang einer optischen Achse des Moduls zu bilden;
**dadurch gekennzeichnet, dass** es ferner einen Kollimator (12) umfasst, der eine Eintrittsseite (12²) besitzt, die die von der ersten Quelle (14) emittierten Strahlen ein erstes Mal umlenkt, um sie weniger divergent zu machen, und Facetten (12³), die eine Austrittsseite bilden, die die Strahlen ein zweites Mal umlenkt, wobei die von der ersten Lichtquelle (14) emittierten Lichtstrahlen von dem Kollimator (12) entlang einer Hauptrichtung so umgelenkt werden, dass
- die umgelenkten Lichtstrahlen die zweite Lichtquelle (8) mit einem Einfallswinkel β ungleich null treffen
- die Lichtstrahlen das zweite Mal so umgelenkt werden, dass sie zu einem Bereich der zweiten Quelle (8) nahe der optischen Achse des Leuchtmoduls geführt werden.

2. Leuchtmodul (2) nach Anspruch 1, **dadurch gekennzeichnet, dass** der Kollimator (12) ein transluzentes oder transparentes Element umfasst, das zwei Diopter (12², 12³) bildet.

3. Leuchtmodul (2) nach einem der Ansprüche 1 bis 2, **dadurch gekennzeichnet, dass** die erste Lichtquelle aus einer oder mehreren Leuchtdioden (14) besteht.

4. Leuchtmodul (2) nach Anspruch 3, **dadurch gekennzeichnet, dass** die Leuchtdiode(n) (14) der ersten Lichtquelle in einen Halbraum leuchten, der durch eine Ebene begrenzt wird, die einen Winkel α von weniger als 70°, bevorzugt weniger als 60°, noch bevorzugter weniger als 50° mit der Senkrechten zur Mittelebene der zweiten Lichtquelle (8) bildet.

5. Leuchtmodul (2) nach einem der Ansprüche 1 bis 4, **dadurch gekennzeichnet, dass** der Einfallswinkel β der aus dem Kollimator (12) austretenden Strahlen mit der zweiten Lichtquelle (8) größer als 10°, bevorzugt 15°, noch bevorzugter 20° ist.

6. Leuchtmodul (2) nach einem der Ansprüche 1 bis 5, **dadurch gekennzeichnet, dass** der Kollimator (12) optisch zwischen der ersten und der zweiten Lichtquelle (14, 8) angeordnet ist.

7. Leuchtmodul (2) nach einem der Ansprüche 1 bis 6, **dadurch gekennzeichnet, dass** die zweite Lichtquelle (8) einen Winkel γ mit einer senkrecht zu der optischen Achse des Moduls verlaufenden Richtung bildet, der zwischen 3° und 30°, bevorzugt zwischen 5° und 25°, noch bevorzugter zwischen 8° und 20° beträgt.

8. Leuchtmodul (2) nach einem der Ansprüche 1 bis 7, **dadurch gekennzeichnet, dass** das durch Reflexion an der zweiten Lichtquelle (8) gebildete Lichtbündel ein erstes Bündel ist, wobei die zweite Lichtquelle (8) geeignet ist, ein zweites Lichtbündel zu erzeugen.

9. Leuchtmodul (2) nach Anspruch 8, **dadurch gekennzeichnet, dass** das erste Bündel einer Bremssignalisierungsfunktion für ein Kraftfahrzeug entspricht und/oder das zweite Bündel einer Positionssignalisierungsfunktion für ein Kraftfahrzeug entspricht.

10. Leuchtmodul (2) nach einem der Ansprüche 1 bis 9, **dadurch gekennzeichnet, dass** sich die zweite Lichtquelle (8) quer zu der optischen Achse des Moduls über die erste Lichtquelle (14) hinaus erstreckt.

11. Leuchtmodul (2) nach einem der Ansprüche 1 bis 10, **dadurch gekennzeichnet, dass** die zweite Lichtquelle (8) zwei organische Leuchtdioden umfasst, die sich quer zu der optischen Achse in im Wesentlichen entgegengesetzte Richtungen erstrecken und in Richtung des Lichtbündels in Bezug auf eine senkrecht zu der optischen Achse des Moduls verlaufende Richtung geneigt sind.

12. Leuchtmodul (2) nach Anspruch 11, **dadurch gekennzeichnet, dass** die erste Lichtquelle zwei Sätze aus punktförmigen Leuchtdioden (14) umfasst, wobei jeder Satz so angeordnet ist, dass jeweils eine der beiden flächigen organischen Leuchtdioden (8) beleuchtet wird.

13. Leuchtmodul (2) nach Anspruch 12, **dadurch gekennzeichnet, dass** die beiden Sätze aus Dioden (14) der ersten Lichtquelle jeweils an zwei Wänden (4²) angeordnet sind, die in Bezug auf die optische Achse so geneigt sind, dass sie eine Kavität mit einer zur Vorderseite des Moduls hin gerichteten Öffnung bilden, wobei das Modul (2) eine dritte Lichtquelle (16) umfasst, die in der Kavität angeordnet ist und geeignet ist, ein zusätzliches Lichtbündel zu bilden.

14. Leuchtmodul (2) nach Anspruch 13, **dadurch gekennzeichnet, dass** der Kollimator (12) ein erster Kollimator ist, wobei das Modul (2) einen zweiten Kollimator (10) in der Kavität umfasst, der geeignet ist, die von der dritten Lichtquelle (16) emittierten Lichtstrahlen entlang der optischen Achse umzulenken, um das zusätzliche Lichtbündel zu bilden.

15. Leuchtmodul (2) nach einem der Ansprüche 13 und 14, **dadurch gekennzeichnet, dass** das zusätzliche Lichtbündel einer Richtungsanzeigefunktion für ein Kraftfahrzeug entspricht.

16. Leuchtvorrichtung, insbesondere zur Beleuchtung und/oder Signalisierung, für ein Kraftfahrzeug, umfassend:
- ein Gehäuse;
- ein Leuchtmodul, das in dem Gehäuse aufgenommen ist;
**dadurch gekennzeichnet, dass**
das Leuchtmodul einem der Ansprüche 1 bis 15 entspricht.

## Claims

1. Light module (2), notably for a motor vehicle, comprising:
- a first light source (14) of the semiconductor type;
- a second surface light source (8) of the organic light-emitting diode type suitable for reflecting the light rays emitted by the first light source (14) in order to form a light beam along an optical axis of the module;
**characterized in that** it further comprises:
a collimator (12) comprising an input face (12²) deflecting a first time the rays emitted by the first light source (14) so as to render them less divergent and facets (12³) forming an output face deflecting the rays a second time, the light rays emitted by the first light source (14) being deflected by the collimator (12) in a main direction so that
- the deflected light rays meet the second light source (8) with a non-zero angle of incidence β;
- the rays are deviated a second time so as to be directed toward a portion of the second light source (8) which is close to the optical axis of the light module.

2. Light module (2) according to Claim 1, **characterized in that** the collimator (12) comprises a translucent or transparent element forming two diopters (12², 12³).

3. Light module (2) according to one of Claims 1 to 2, **characterized in that** the first light source consists of one or more light-emitting diodes (14).

4. Light module (2) according to Claim 3, **characterized in that** the light-emitting diode or diodes (14) of the first light source illuminate in a half-space delimited by a plane forming an angle α of less than 70°, preferentially less than 60°, more preferentially less than 50°, with the perpendicular to the mean plane of the second light source (8).

5. Light module (2) according to one of Claims 1 to 4, **characterized in that** the angle of incidence β of the rays outgoing from the collimator (12) with the second light source (8) is greater than 10°, preferentially 15°, more preferentially 20°.

6. Light module (2) according to one of Claims 1 to 5, **characterized in that** the collimator (12) is arranged optically between the first and second light sources (14, 8).

7. Light module (2) according to one of Claims 1 to 6, **characterized in that** the second light source (8) forms an angle γ with a direction at right angles to the optical axis of the module, which lies between 3° and 30°, preferentially between 5° and 25°, more preferentially between 8° and 20°.

8. Light module (2) according to one of Claims 1 to 7, **characterized in that** the light beam formed by reflection on the second light source (8) is a first beam, the second light source (8) being suitable for producing a second light beam.

9. Light module (2) according to Claim 8, **characterized in that** the first beam corresponds to a brake indicator function for a motor vehicle and/or the second beam corresponds to a side marker indicator function for a motor vehicle.

10. Light module (2) according to one of Claims 1 to 9, **characterized in that** the second light source (8) extends transversely to the optical axis of the module beyond the first light source (14).

11. Light module (2) according to one of Claims 1 to 10, **characterized in that** the second light source (8) comprises two organic light-emitting diodes extending transversely to the optical axis in directions that are generally opposing and inclined in the direction of the light beam relative to a direction at right angles to the optical axis of the module.

12. Light module (2) according to Claim 11, **characterized in that** the first light source comprises two sets of spot light-emitting diodes (14), each set being arranged so as to illuminate one of the two surface organic light-emitting diodes (8), respectively.

13. Light module (2) according to Claim 12, **characterized in that** the two sets of diodes (14) of the first light source are arranged, respectively, on two walls (4²) that are inclined relative to the optical axis so as to form a cavity with an aperture directed toward the front of the module, the module (2) comprising a third light source (16) arranged in said cavity and suitable for forming an additional light beam.

14. Light module (2) according to Claim 13, **characterized in that** the optical device (12) is a first optical device, the module (2) comprising a second optical device (10) in the cavity, suitable for deflecting the light rays emitted by the third light source (16) along the optical axis in order to form the additional light beam.

15. Light module (2) according to one of Claims 13 and 14, **characterized in that** the additional light beam corresponds to a direction indicator function for a motor vehicle.

16. Light device, notably a lighting and/or signaling device, for a motor vehicle, comprising:
- a casing;
- a light module housed in the casing;
**characterized in that**
the light module conforms to one of Claims 1 to 15.
